# FASCICULE DE BREVET EUROPEEN

(11) **EP 3 999 379 B1**
(45) Date de publication et mention de la délivrance du brevet: **14.10.2026**
(21) Numéro de dépôt: 20735399.6
(22) Date de dépôt: 02.07.2020
(51) Int. Cl.: B60Q 1/00, F21S 41/20, F21S 41/50

(54) **DISPOSITIF LUMINEUX DE VÉHICULE AUTOMOBILE**
KRAFTFAHRZEUGBELEUCHTUNGSVORRICHTUNG
MOTOR VEHICLE LIGHTING DEVICE

(30) Priorité: 16.07.2019 FR 1907988
(43) Date de publication de la demande: 25.05.2022
(73) Titulaire: Valeo Vision, 93012 Bobigny Cedex (FR)
(72) Inventeur: JOËRG, Alexandre, 93012 BOBIGNY Cedex (FR); RENAUD, Pierre, 93012 BOBIGNY Cedex (FR)
(74) Mandataire: Valeo Visibility
(86) Numéro de dépôt international: PCT/EP2020/068621
(87) Numéro de publication internationale: WO 2021/008880

(56) Documents cités:
- EP-A1- 2 196 792
- EP-A2- 0 526 424
- DE-A1- 102017 109 905
- DE-A1- 102017 218 683
- FR-A1- 3 062 892
- US-A- 6 132 072
- US-A1- 2003 156 425

## Description

L'invention concerne le domaine de l'éclairage automobile et/ou de la signalisation automobile.

L'invention concerne l'éclairage extérieur d'un véhicule que ce soit à l'avant, au regard d'un projecteur d'éclairage, ou à l'arrière au regard d'un feu de signalisation.

Dans le domaine des dispositifs d'éclairage et/ou de signalisation automobile, il est connu des modules lumineux comprenant un corps qui comporte une paroi frontale transparente pouvant former une ou plusieurs lentilles, au moins un cache délimitant le volume intérieur du module, et au moins une source d'éclairage agencée à l'intérieur du module et émettant un faisceau lumineux en direction de la paroi frontale. La paroi transparente est en matière plastique ou en verre, et est apte à laisser passer les rayons lumineux sans perturber de façon significative leur direction ou leur intensité.

Par ailleurs, les véhicules sont de plus en plus équipés de capteurs tels que les systèmes de détection pour la détection d'objets, d'obstacles sur la route. Un système de détection comprend un élément émetteur d'un signal, un élément récepteur du signal et des moyens de traitement électroniques. Généralement, un système de détection du type radar est disposé dans le pare-chocs du véhicule afin d'être agencé dans la zone extérieure du véhicule et de manière visible pour assurer leur fonction d'émission-réception. Toutefois, une telle intégration peut nuire à la ligne esthétique du véhicule et/ou à ses propriétés aérodynamiques, et même à la performance du système radar, le pare-chocs pouvant réfléchir ou absorber une partie des ondes radar.

Pour ne pas modifier la ligne conçue originellement de la carrosserie du véhicule, il est connu d'intégrer un système radar dans un dispositif lumineux, les ondes radar étant destinées à traverser la paroi frontale transparente du dispositif. Cependant, un tel agencement visible affecte l'esthétisme du dispositif lumineux.

En outre, il n'est pas envisageable de cacher le système radar derrière le dispositif lumineux, car le revêtement métallique qui recouvre l'intérieur du dispositif lumineux pour davantage réfléchir la lumière de l'éclairage vers l'extérieur, constituerait une barrière à la transmission des ondes radar.

Le document US 2006/156425A1 décrit un dispositif lumineux de l'état de la technique.

L'invention a donc pour but de fournir une solution d'intégration dans un véhicule d'un système de détection, qui ne présente pas les inconvénients de l'art antérieur de sorte à conserver une ligne esthétique pour le véhicule, tout en s'assurant de ne pas perturber la transmission en émission et réception des ondes du système de détection.

L'invention a ainsi pour objet un dispositif lumineux de véhicule automobile comportant un logement, au moins une source d'éclairage agencée dans le logement (et émettant des rayons lumineux dans le spectre du visible), au moins un système de détection disposé dans le logement et comprenant un émetteur et/ou un récepteur agencés pour émettre et recevoir des ondes électromagnétiques dans une plage de longueurs d'onde prédéterminée, le dispositif lumineux étant caractérisé en ce qu'il comporte un enjoliveur qui est disposé dans le logement et derrière lequel sont agencés l'émetteur et/ou le récepteur du système de détection, et en ce que l'enjoliveur comporte un filtre interférentiel qui est transparent en transmission aux longueurs d'onde dans la plage de longueurs d'onde prédéterminée et est réfléchissant pour les longueurs d'onde émises dans le visible, l'enjoliveur comportant un revêtement formant le filtre interférentiel et comprenant un empilement de couches minces à haut indice de réfraction et à bas indice de réfraction, l'indice des couches à haut indice étant sensiblement supérieur à celui des couches de bas indice.

L'émetteur et le récepteur du système de détection peuvent former un même module ou être formés de deux modules positionnés de manière adjacente derrière l'enjoliveur. En variante, seul l'émetteur ou le récepteur est placé dans le dispositif lumineux derrière l'enjoliveur, le module complémentaire de réception ou d'émission étant destiné à être agencé en un autre emplacement du véhicule.

Le système de détection est par exemple un radar ou un lidar, ou autre. En fonction du type de système de détection imposé et donc de sa longueur d'onde ou de sa plage de longueurs d'onde prédéterminée, le filtre interférentiel sera sélectionné pour être transparent en transmission aux longueurs d'onde dans la plage de longueurs d'onde prédéterminée et réfléchissant au regard des longueurs d'onde émises dans le visible.

Par conséquent, afin de conserver l'esthétisme du dispositif lumineux et de fournir la fonction de détection, il a été imaginé d'intégrer un système de détection au dispositif lumineux, tout en le masquant par un enjoliveur disposé devant ledit système de détection sans affecter le fonctionnement de ce dernier. L'enjoliveur est avantageusement conçu pour assurer une transmission optimale des ondes vers l'extérieur du véhicule et une réception optimale des ondes en retour. L'enjoliveur constitue en outre un miroir réfléchissant/un filtre réfléchissant pour les rayons lumineux du domaine du visible, et donc de la source d'éclairage, tout en étant transparent aux longueurs d'onde du système de détection. L'empilement crée un phénomène d'interférences constructives et destructives dans les couches pour assurer une réflexion pour certaines longueurs d'onde et une transmission pour d'autres longueurs d'onde, procurant au final un filtre réfléchissant dont la bande passante de réflexion correspond à la plage de longueurs d'onde du visible.

Ainsi, l'enjoliveur avec sa propriété de réflexion des rayons lumineux du domaine du visible (donc de la source d'éclairage) garantit une réflexion totale de la lumière visible, en particulier le dispositif lumineux conservant sa fonction première d'éclairage sans perturbation. En outre, le système de détection reste opérationnel en émettant et/ou en recevant les ondes émises ou reçues en fonction de l'intégration d'un émetteur et/ou d'un récepteur derrière l'enjoliveur. Enfin, l'enjoliveur permet de cacher à la vue le système de détection, conservant l'aspect esthétique du dispositif lumineux.

Selon l'invention, l'enjoliveur comporte un revêtement (réfléchissant pour les longueurs d'onde du visible) formant le filtre interférentiel et comprenant un empilement de couches minces, dites pour certaines à haut indice de réfraction, et pour d'autres dites à bas indice de réfraction, l'indice des couches à haut indice étant sensiblement supérieur à celui des couches de bas indice. Le cas échéant, les indices des couches minces à haut indice de réfraction sont identiques et les indices des couches minces à bas indice de réfraction sont identiques.

On entend par couche à haut indice de réfraction, un matériau d'indice de réfraction supérieur ou égal à 1,7, et une couche à bas indice de réfraction, un matériau d'indice de réfraction inférieur à 1,7, de préférence inférieur ou égal à 1,6.

Les indices de réfractions sont tous mesurés, comme usuellement, à une longueur d'onde de 550 nm.

Avantageusement, le revêtement est déposé sur la face de l'enjoliveur opposée à celle en regard du système de détection, c'est-à-dire sur la face qui est en regard de l'intérieur du volume accueillant la source d'éclairage.

De préférence, l'empilement de couches minces est fait de l'alternance d'au moins deux couches consécutives, l'une à haut indice de réfraction et l'autre à bas indice de réfraction.

De préférence, l'empilement comporte une couche à haut indice de réfraction en contact direct avec (le substrat de) l'enjoliveur.

De préférence, la couche la plus extérieure à l'empilement et à l'opposé de l'enjoliveur, est une couche à haut indice de réfraction.

Par une couche en contact direct avec une autre couche, on entend au sens de l'invention qu'aucune couche n'est interposée entre les deux dites couches.

L'empilement peut comprendre une couche de liaison entre (le substrat de) l'enjoliveur et la première couche de l'empilement déposée sur (le substrat de) l'enjoliveur.

Selon une autre caractéristique, le ou les matériaux des couches à haut indice de réfraction et le ou les matériaux des couches à bas indice de réfraction sont adaptés en fonction de la largeur de la bande passante en réflexion dans le domaine du visible du filtre interférentiel (et de la largeur de la bande passante des ondes émises par le système de détection). En particulier, lorsque les couches à haut indice de réfraction sont dans un même matériau d'indice n_{H}, et les couches à bas indice de réfraction sont dans un même matériau d'indice n_{L}, les deux matériaux sont choisis de sorte que le rapport des indices n_{H} / n_{L} corresponde à la largeur de la bande passante en réflexion dans le domaine du visible du filtre interférentiel.

Selon encore une autre caractéristique, afin de maximiser le pouvoir réfléchissant de l'empilement à fonction réfléchissante par interférences constructives et destructives, chaque couche est choisie de façon que le produit de l'indice de réfraction du matériau de la couche et de l'épaisseur de la couche soit proportionnel à la longueur d'onde centrée sur la bande passante en réflexion du filtre interférentiel réfléchissant dans le domaine du visible (en particulier proportionnel à la longueur d'onde centrée sur la bande passante de la source d'éclairage). Cette proportionnalité est par exemple égale au quart de la longueur d'onde.

En outre, pour assurer une réflexion importante sur une plage de longueurs d'onde du visible la plus large possible, on adaptera les matériaux à haut et bas indices de réfraction afin que la différence entre les indices soit sensiblement proportionnelle à la largeur de ladite plage.

Dans un exemple préféré, l'empilement comporte au moins cinq couches selon la séquence suivante : enjoliveur/couche à haut indice de réfraction/ couche à bas indice de réfraction/ couche à haut indice de réfraction/ couche à bas indice de réfraction/ couche à haut indice de réfraction.

Avantageusement, l'épaisseur de chaque couche est comprise entre 10 nm et 1 µm, en particulier entre 50 nm et 70 nm.

Les matériaux à bas indice de réfraction sont à base de ou choisis parmi des matériaux dont l'indice de réfraction est inférieur à 1,6 pour une longueur d'onde de 550 nm, et notamment seuls ou en combinaison parmi SiO₂, MgF₂, LiF, CaF₂, NaF, ZrF₄, AlF₃, Na₅Al₃F₁₄, Na₃AlF₆.

Les matériaux à haut indice de réfraction sont à base de ou choisis parmi des matériaux dont l'indice de réfraction est supérieur à 1,7 pour une longueur d'onde de 550 nm, et notamment seuls ou en combinaison parmi ZrO₂, TiO₂, Ta₂O₅, Na₂O₅, SnO₂, ZnO, ZnS, HfO₂, Pr₂O₃, PrTiO₃, La₂O₃, Dy₂O₅, In₂O₃, Nb₂O₅, Yb₂O₃, Si₃N₄, AIN.

Selon l'invention, le dispositif lumineux de l'invention est en particulier utilisé en tant que projecteur d'éclairage ou dispositif de signalisation. Le cas échéant, la source d'éclairage du dispositif lumineux est agencée pour réaliser, seule ou en combinaison avec une autre source lumineuse, tout ou partie d'au moins une fonction d'éclairage et/ou de signalisation réglementaire prédéterminée.

La présente invention est maintenant décrite à l'aide d'exemples uniquement illustratifs et nullement limitatifs de la portée de l'invention, et à partir des illustrations jointes, dans lesquelles :
[Fig. 1] représente une vue schématique en coupe et de côté d'un dispositif lumineux de véhicule.
[Fig. 2] représente un exemple d'empilement du revêtement réfléchissant de l'enjoliveur.

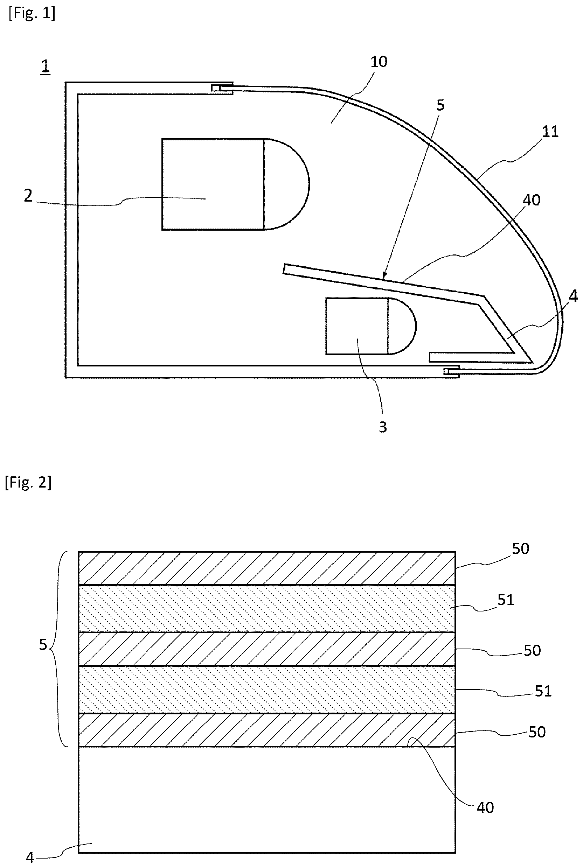

Le dispositif lumineux 1 de l'invention illustré sur la figure 1 est dans l'exemple un projecteur avant d'un véhicule automobile. Le dispositif lumineux 1 comporte dans un logement fermé 10, dont la partie frontale 11 est dotée d'une paroi transparente, au moins une source d'éclairage 2, et un système de détection 3.

La partie frontale 11 transparente constitue la surface d'émission de la lumière à l'extérieur du dispositif lumineux. Elle comprend de préférence une ou des lentilles.

Le système de détection 3 est par exemple un détecteur d'objets ou d'obstacles pouvant se trouver face au dispositif lumineux, et donc face au véhicule. Les longueurs d'onde des ondes électromagnétiques dépendent du type de système de détection. A titre d'exemple, la plage de longueurs d'onde est de 3,5 à 4 mm pour un système radar.

Le système de détection 3 comporte un élément d'émission d'ondes de fonctionnement du système, un élément de réception des ondes et au moins un module électronique de traitement. L'élément d'émission et de réception et le module électronique peuvent former ou non un module monobloc.

Selon l'invention, le dispositif lumineux 1 comporte un enjoliveur 4 agencé dans le logement 10 et permettant de cacher à la vue le système de détection 3, le système de détection étant ainsi placé derrière l'enjoliveur.

Selon l'invention, l'enjoliveur 4 forme un filtre interférentiel qui est transparent en transmission aux longueurs d'onde dans la plage de longueurs d'onde prédéterminée des ondes électromagnétiques du système de détection, et est réfléchissant pour les longueurs d'onde émises dans le visible.

L'enjoliveur 4 comporte sur sa face 40 agencée à l'opposé du système de détection 3 et en regard de l'intérieur du logement 10, un revêtement réfléchissant 5. Le revêtement réfléchissant 5 est transparent en transmission aux longueurs d'onde émises par le système de détection 3 et est à propriété réfléchissante pour les longueurs d'onde émises dans le domaine du visible, en particulier pour les longueurs d'onde émises par la source d'éclairage 2.

L'enjoliveur 4 forme avec son revêtement réfléchissant 5 un miroir réfléchissant qui :
- empêche de voir ce qui est derrière l'enjoliveur et permet ainsi de cacher à la vue le système de détection 3 pour conserver l'esthétisme du dispositif lumineux,
- constitue une surface réfléchissante pour les rayons lumineux du domaine du visible, en particulier en provenance de la source d'éclairage, qui sont ainsi assurés d'être réfléchis, et
- assure néanmoins aux ondes du système de détection de traverser le revêtement en vue de sortir du logement 10.

Le revêtement réfléchissant 5 forme un filtre réfléchissant dont la bande passante de réflexion correspond à une plage du domaine du visible, de préférence la bande passante de réflexion présentant un facteur de réflexion d'au moins 50% pour une bande passante de 425 à 600 nm, et de préférence présentant un facteur de réflexion d'au moins 80% pour une plage de 450 à 570 nm et un facteur de réflexion de l'ordre de 90% à 500 nm.

En regard de la figure 2, le revêtement réfléchissant 5 est un empilement de couches minces transparentes (dans le visible) déposées sur l'enjoliveur 4.

L'enjoliveur 4 comprend un substrat en un matériau de préférence transparent, tel qu'en verre ou en matière plastique tel qu'en polycarbonate (PC) ou polymétacrylate de méthyle (PMMA).

L'empilement de couches minces comporte des couches à haut indice de réfraction n_{H}, en particulier en matériau d'indice de réfraction supérieur ou égal à 1,7, et à bas indice de réfraction n_{L}, en particulier en matériau d'indice de réfraction inférieur ou égal à 1,6.

De préférence, l'empilement de couches minces est fait de l'alternance d'au moins deux couches consécutives, l'une à haut indice de réfraction et l'autre à bas indice de réfraction.

La couche à bas indice de réfraction peut présenter une épaisseur supérieure à celle à haut indice de réfraction.

Dans l'exemple illustré, les indices des couches minces à haut indice de réfraction sont identiques et les indices des couches minces à bas indice de réfraction sont identiques, et l'empilement comporte cinq couches selon la séquence suivante : enjoliveur 4/couche 50 à haut indice de réfraction n_{H}/ couche 51 à bas indice de réfraction n_{L},/ couche 50 à haut indice de réfraction n_{H} / couche 51 à bas indice de réfraction n_{L}/ couche 50 à haut indice de réfraction n_{H}.

Les couches minces sont déposées de manière connue par PVD (Physical Vapor Deposition) avec une technique du type évaporation par faisceau d'électrons ou pulvérisation magnétron.

La couche 50 à haut indice de réfraction est par exemple du pentoxide de tantale (Ta₂O₅), d'indice 2,1. Elle présente une épaisseur par exemple comprise entre 50 et 70 nm.

La couche 51 à bas indice de réfraction est par exemple en dioxyde de silicium (SiO₂), d'indice 1,46. Elle présente une épaisseur par exemple comprise entre 50 et 70 nm.

Un tel empilement permet d'obtenir un filtre réfléchissant dont la réflexion est optimale, en particulier un facteur de réflexion supérieur à 80 % pour les longueurs d'onde de 450 à 570 nm.

Par conséquent, le dispositif lumineux 1 de l'invention procure une intégration invisible d'un système de détection dans un véhicule, tout en assurant une réflexion optimale de la lumière du visible, en particulier en ne perturbant pas la performance du système d'éclairage.

## Revendications

1. Dispositif lumineux (1) de véhicule automobile comportant un logement (10), au moins une source d'éclairage (2) agencée dans le logement, et au moins un système de détection (3) agencé dans le logement et comprenant un émetteur et/ou un récepteur agencés pour émettre et recevoir des ondes électromagnétiques dans une plage de longueurs d'onde prédéterminée, comportant un enjoliveur (4) disposé dans le logement (10) et derrière lequel sont agencés l'émetteur et/ou le récepteur du système de détection (3), l'enjoliveur (4) comportant un filtre interférentiel qui est transparent en transmission aux longueurs d'onde dans la plage de longueurs d'onde prédéterminée et est réfléchissant pour les longueurs d'onde émises dans le visible **caractérisé en ce que** l'enjoliveur (4) comporte un revêtement (5) formant le filtre interférentiel et comprenant un empilement de couches minces à haut indice de réfraction et à bas indice de réfraction, l'indice des couches à haut indice étant sensiblement supérieur à celui des couches de bas indice.

2. Dispositif lumineux selon la revendication 1, **caractérisé en ce que** les indices des couches minces à haut indice de réfraction sont identiques et les indices des couches minces à bas indice de réfraction sont identiques.

3. Dispositif lumineux selon la revendication 1 ou 2, **caractérisé en ce qu'**une couche à haut indice de réfraction est en un matériau d'indice de réfraction supérieur ou égal à 1,7, et une couche à bas indice de réfraction est en un matériau d'indice de réfraction inférieur à 1,7, de préférence inférieur ou égal 1,6.

4. Dispositif lumineux selon l'une quelconque des revendications 1 à 3, **caractérisé en ce que** le revêtement (5) est déposé sur la face (40) de l'enjoliveur opposée à celle en regard du système de détection (3).

5. Dispositif lumineux selon l'une quelconque des revendications 1 à 4, **caractérisé en ce que** l'empilement de couches minces est fait de l'alternance d'au moins deux couches consécutives, l'une à haut indice de réfraction et l'autre à bas indice de réfraction.

6. Dispositif lumineux selon l'une quelconque des revendications 1 à 5, **caractérisé en ce que** la couche la plus extérieure à l'empilement et à l'opposé de l'enjoliveur, est une couche à haut indice de réfraction.

7. Dispositif lumineux selon l'une quelconque des revendications 1 à 6, **caractérisé en ce que** l'empilement comporte une couche à haut indice de réfraction en contact direct avec l'enjoliveur.

8. Dispositif lumineux selon l'une quelconque des revendications 1 à 7, **caractérisé en ce que** l'empilement comporte au moins cinq couches selon la séquence suivante : enjoliveur/couche à haut indice de réfraction/ couche à bas indice de réfraction/ couche à haut indice de réfraction/ couche à bas indice de réfraction/ couche à haut indice de réfraction.

9. Dispositif lumineux selon l'une quelconque des revendications 1 à 8, **caractérisé en ce que** le ou les matériaux des couches à haut indice de réfraction et le ou les matériaux des couches à bas indice de réfraction sont adaptés en fonction de la largeur de la bande passante en réflexion dans le domaine du visible du filtre interférentiel, en particulier lorsque les couches à haut indice de réfraction sont dans un même matériau d'indice n_{H}, et les couches à bas indice de réfraction sont dans un même matériau d'indice n_{L}, les deux matériaux sont choisis de sorte que le rapport des indices n_{H} / n_{L} corresponde à la largeur de la bande passante en réflexion dans le domaine du visible du filtre interférentiel.

10. Dispositif lumineux selon l'une quelconque des revendications 1 à 9, **caractérisé en ce que** chaque couche est choisie de façon que le produit de l'indice de réfraction du matériau de la couche et de l'épaisseur de la couche soit proportionnel à la longueur d'onde centrée sur la bande passante en réflexion du filtre interférentiel dans le domaine du visible.

11. Dispositif lumineux selon l'une quelconque des revendications 1 à 10, **caractérisé en ce que** l'épaisseur de chaque couche est comprise entre 10 nm et 1 µm, en particulier entre 50 nm et 70 nm.

12. Dispositif lumineux selon l'une quelconque des revendications 1 à 11, **caractérisé en ce que** les matériaux à bas indice de réfraction sont à base de, ou choisis parmi, seuls ou en combinaison, SiO₂, MgF₂, LiF, CaF₂, NaF, ZrF₄, AlF₃, Na₅Al₃F₁₄, Na₃AlF₆.

13. Dispositif lumineux selon l'une quelconque des revendications 1 à 12, **caractérisé en ce que** les matériaux à haut indice de réfraction sont à base de, ou choisis parmi, seuls ou en combinaison, ZrO₂, TiO₂, Ta₂O₅, Na₂O₅, SnO₂, ZnO, ZnS, HfO₂, Pr₂O₃, PrTiO₃, La₂O₃, Dy₂O₅, In₂O₃, Nb₂O₅, Yb₂O₃, Si₃N₄, AIN.

14. Dispositif lumineux selon l'une quelconque des revendications précédentes, **caractérisé en ce qu'**il est utilisé en tant que projecteur d'éclairage ou dispositif de signalisation, notamment la source d'éclairage du dispositif lumineux est agencée pour réaliser, seule ou en combinaison avec une autre source lumineuse, tout ou partie d'au moins une fonction d'éclairage et/ou de signalisation réglementaire prédéterminée.

## Patentansprüche

1. Leuchtvorrichtung (1) für ein Kraftfahrzeug, umfassend ein Gehäuse (10), mindestens eine im Gehäuse angeordnete Lichtquelle (2) und mindestens ein im Gehäuse angeordnetes Detektionssystem (3), das einen Sender und/oder einen Empfänger umfasst, die zum Aussenden und Empfangen elektromagnetischer Wellen in einem vorbestimmten Wellenlängenbereich ausgelegt sind, mit einer Blende (4), die im Gehäuse (10) angeordnet ist und hinter der der Sender und/oder der Empfänger des Detektionssystems (3) angeordnet sind, wobei die Blende (4) einen Interferenzfilter aufweist, der für Wellenlängen im vorbestimmten Wellenlängenbereich transmissionstransparent ist und für im sichtbaren Bereich emittierte Wellenlängen reflektierend ist, **dadurch gekennzeichnet, dass** die Blende (4) eine Beschichtung (5) aufweist, die den Interferenzfilter bildet und einen Stapel aus Dünnschichten mit hohem Brechungsindex und niedrigem Brechungsindex umfasst, wobei der Index der Schichten mit hohem Brechungsindex wesentlich höher ist als der der Schichten mit niedrigem Brechungsindex.

2. Leuchtvorrichtung nach Anspruch 1, **dadurch gekennzeichnet, dass** die Brechungsindizes der Dünnschichten mit hohem Brechungsindex identisch sind und die Brechungsindizes der Dünnschichten mit niedrigem Brechungsindex identisch sind.

3. Leuchtvorrichtung nach Anspruch 1 oder 2, **dadurch gekennzeichnet, dass** eine Schicht mit hohem Brechungsindex aus einem Material mit einem Brechungsindex von größer oder gleich 1,7 besteht und eine Schicht mit niedrigem Brechungsindex aus einem Material mit einem Brechungsindex von kleiner als 1,7, vorzugsweise kleiner oder gleich 1,6, besteht.

4. Leuchtvorrichtung nach einem der Ansprüche 1 bis 3, **dadurch gekennzeichnet, dass** die Beschichtung (5) auf der Fläche (40) der Blende aufgebracht ist, die der dem Detektionssystem (3) zugewandten Fläche gegenüberliegt.

5. Leuchtvorrichtung nach einem der Ansprüche 1 bis 4, **dadurch gekennzeichnet, dass** der Schichtenstapel aus der Abwechslung von mindestens zwei aufeinanderfolgenden Schichten besteht, einer mit hohem Brechungsindex und einer mit niedrigem Brechungsindex.

6. Leuchtvorrichtung nach einem der Ansprüche 1 bis 5, **dadurch gekennzeichnet, dass** die äußerste Schicht des Stapels, die der Blende gegenüberliegt, eine Schicht mit hohem Brechungsindex ist.

7. Leuchtvorrichtung nach einem der Ansprüche 1 bis 6, **dadurch gekennzeichnet, dass** der Stapel eine Schicht mit hohem Brechungsindex umfasst, die in direktem Kontakt mit der Blende steht.

8. Leuchtvorrichtung nach einem der Ansprüche 1 bis 7, **dadurch gekennzeichnet, dass** der Stapel mindestens fünf Schichten in folgender Reihenfolge umfasst: Blende/Schicht mit hohem Brechungsindex/Schicht mit niedrigem Brechungsindex/Schicht mit hohem Brechungsindex/Schicht mit niedrigem Brechungsindex/Schicht mit hohem Brechungsindex.

9. Leuchtvorrichtung nach einem der Ansprüche 1 bis 8, **dadurch gekennzeichnet, dass** das Material bzw. die Materialien der Schichten mit hohem Brechungsindex und das Material bzw. die Materialien der Schichten mit niedrigem Brechungsindex in Abhängigkeit von der Breite des Reflexionsdurchlassbandes im sichtbaren Bereich des Interferenzfilters angepasst sind, insbesondere wenn die Schichten mit hohem Brechungsindex aus demselben Material mit dem Index NH bestehen und die Schichten mit niedrigem Brechungsindex aus demselben Material mit dem Index NL bestehen, werden die beiden Materialien so gewählt, dass das Verhältnis der Indizes NH / NL der Breite des Reflexionsdurchlassbandes im sichtbaren Bereich des Interferenzfilters entspricht.

10. Leuchtvorrichtung nach einem der Ansprüche 1 bis 9, **dadurch gekennzeichnet, dass** jede Schicht so gewählt wird, dass das Produkt aus dem Brechungsindex des Schichtmaterials und der Schichtdicke proportional zur Wellenlänge ist, die auf das Reflexionsdurchlassband des Interferenzfilters im sichtbaren Bereich zentriert ist.

11. Leuchtvorrichtung nach einem der Ansprüche 1 bis 10, **dadurch gekennzeichnet, dass** die Dicke jeder Schicht zwischen 10 nm und 1 µm, insbesondere zwischen 50 nm und 70 nm, liegt.

12. Leuchtvorrichtung nach einem der Ansprüche 1 bis 11, **dadurch gekennzeichnet, dass** die Materialien mit niedrigem Brechungsindex auf Basis von oder ausgewählt aus, allein oder in Kombination, SiO2, MgF2, LiF, CaF2, NaF, ZrF4, AlF3, Na5Al3F14, Na3AlF6 sind.

13. Leuchtvorrichtung nach einem der Ansprüche 1 bis 12, **dadurch gekennzeichnet, dass** die Materialien mit hohem Brechungsindex auf Basis von oder ausgewählt aus, allein oder in Kombination, ZrO2, TiO2, Ta2O5, Na2O5, SnO2, ZnO, ZnS, HfO2, Pr2O3, PrTiO3, La2O3, Dy2O5, In2O3, Nb2O5, Yb2O3, Si3N4, AlN sind.

14. Leuchtvorrichtung nach einem der vorhergehenden Ansprüche, **dadurch gekennzeichnet, dass** sie als Scheinwerfer oder Signalvorrichtung verwendet wird, wobei insbesondere die Lichtquelle der Leuchtvorrichtung dazu ausgelegt ist, allein oder in Kombination mit einer anderen Lichtquelle, ganz oder teilweise mindestens eine vorbestimmte regulatorische Beleuchtungs- und/oder Signalfunktion zu erfüllen.

## Claims

1. A lighting device (1) for a motor vehicle, comprising a cavity (10), at least one illumination source (2) arranged in the cavity, and at least one detection system (3) which is arranged in the cavity and comprises an emitter and/or a receiver designed to transmit and receive electromagnetic waves in a predetermined wavelength range, comprising a trim (4) arranged in the cavity (10) and behind which the emitter and/or the receiver of the detection system (3) are arranged, the trim (4) comprising an interference filter which is transparent in transmission at wavelengths in the predetermined wavelength range and is reflective for the wavelengths transmitted in the visible spectrum
**characterized in that** trim (4) comprises a coating (5) forming the interference filter and comprising a stack of thin layers with a high refractive index and with a low refractive index, the index of the high-index layers being substantially higher than that of the low-index layers.

2. The lighting device as claimed in claim 1, **characterized in that** the indices of the thin layers with a high refractive index are identical and the indices of the thin layers with a low refractive index are identical.

3. The lighting device as claimed in claim 1 or 2, **characterized in that** a layer with a high refractive index is made of a material with a refractive index higher than or equal to 1.7, and a layer with a low refractive index is made of a material with a refractive index lower than 1.7, preferably lower than or equal to 1.6.

4. The lighting device as claimed in any one of claims 1 to 3, **characterized in that** the coating (5) is deposited on the face (40) of the trim opposite that facing the detection system (3).

5. The lighting device as claimed in any one of claims 1 to 4, **characterized in that** the stack of thin layers is made by alternating at least two consecutive layers, one with a high refractive index and the other with a low refractive index.

6. The lighting device as claimed in any one of claims 1 to 5, **characterized in that** the layer of the stack that is outermost and opposite the trim is a layer with a high refractive index.

7. The lighting device as claimed in any one of claims 1 to 6, **characterized in that** the stack comprises a layer with a high refractive index in direct contact with the trim.

8. The lighting device as claimed in any one of claims 1 to 7, **characterized in that** the stack comprises at least five layers in the following sequence: trim/layer with a high refractive index/layer with a low refractive index/layer with a high refractive index/layer with a low refractive index/layer with a high refractive index.

9. The lighting device as claimed in any one of claims 1 to 8, **characterized in that** the one or more materials of the layers with a high refractive index and the one or more materials of the layers with a low refractive index are adapted according to the width of the passband in reflection in the visible spectrum of the interference filter, in particular when the layers with a high refractive index are made of one and the same material of index n_{H}, and the layers with a low refractive index are made of one and the same material of index n_{L}, the two materials are chosen such that the ratio of the indices n_{H}/n_{L} corresponds to the width of the passband in reflection in the visible spectrum of the interference filter.

10. The lighting device as claimed in any one of claims 1 to 9, **characterized in that** each layer is chosen such that the product of the refractive index of the material of the layer and of the thickness of the layer is proportional to the wavelength centered on the passband in reflection of the interference filter in the visible spectrum.

11. The lighting device as claimed in any one of claims 1 to 10, **characterized in that** the thickness of each layer is between 10 nm and 1 µm, in particular between 50 nm and 70 nm.

12. The lighting device as claimed in any one of claims 1 to 11, **characterized in that** the materials with a low refractive index are based on, or chosen from among, alone or in combination, SiO₂, MgF₂, LiF, CaF₂, NaF, ZrF₄, AlF₃, Na₅Al₃F₁₄, Na₃AlF₆.

13. The lighting device as claimed in any one of claims 1 to 12, **characterized in that** the materials with a high refractive index are based on, or chosen from among, alone or in combination, ZrO₂, TiO₂, Ta₂O₅, Na₂O₅, SnO₂, ZnO, ZnS, HfO₂, Pr₂O₃, PrTiO₃, La₂O₃, Dy₂O₅, In₂O₃, Nb₂O₅, Yb₂O₃, Si₃N₄, AlN.

14. The lighting device as claimed in any one of the preceding claims, **characterized in that** it is used as a headlight or a signaling device, in particular the illumination source of the lighting device is designed to produce, alone or in combination with another illumination source, all or part of at least one predetermined regulatory lighting and/or signaling function.
